# EUROPEAN PATENT APPLICATION

(11) **EP 4 027 415 A1**
(43) Date of publication of application: **13.07.2022**
(21) Application number: 20861051.9
(22) Date of filing: 07.09.2020
(51) Int. Cl.: H01M 6/06, H01M 6/18, H01M 10/44

(54) **SYSTEM AND DEVICE**

(30) Priority: 08.09.2019 JP 2019163465
(71) Applicant: Tripod Design Co., Ltd., Tokyo, 102-0073 (JP)
(72) Inventor: NAKAGAWA Satoshi, Tokyo 102-0073 (JP)
(74) Representative: Hoffmann Eitle
(86) International application number: PCT/JP2020/033841
(87) International publication number: WO 2021/045236

(57) **Abstract**

An object is to provide a system that can provide a stable power supply without being influenced by a time of day and weather conditions, and that is also superior in terms of power generation compared to conventional independent power supply type devices.

A system comprising a first conductive part, a second conductive part, a medium, and a functional part, wherein the first conductive part and the functional part are connected, the second conductive part and the functional part are connected, at least a part of the first conductive part is in contact with the medium, at least a part of the second conductive part is in contact with the medium, and the first conductive part and the second conductive part are not in contact with each other.

## Description

### Technical Field

The present invention relates to a system and an apparatus for providing a self-sustaining power supply.

### Background Art

There are systems which create a path for a flow of electrons by immersing two electrodes composed of each of two different metals in an electrolytic solution and by causing an oxidation or reduction reaction at each electrode (i.e. there is a battery), such as the Voltaic cell and the Daniel cell.

Also, Energy harvesting technology has been attracting attention. Energy harvesting technology can be used to convert visible light, heat, radio wave, or minute amount of energy obtained from decomposition of organic matter by microorganisms into electric power. Research has been carried out for the practical application of a self-sustaining power supply using Energy harvesting technology.

An apparatus using solar power (for example, Patent Literature 1) has been investigated as a self-sustaining power supply used for sensors and so on. However, it may not be able to provide a stable power supply because it is susceptible to the influence of a time of day and weather conditions. Moreover, microbial fuel cell systems (for example, Patent Literature 2) did not generate sufficient electricity.

The liquid used as the electrolytic solution in batteries is very difficult to handle because of the possibility of chemical burns, fire or explosion, or the generation of toxic gases that may have adverse effects on the human body and the environment. Furthermore, it was necessary to prevent the electrolytic solution from leaking for commercialization. This results in the problem of increased costs.

### Citation List

### Patent literature

Patent Literature 1: JP 2007-181278 A
Patent Literature 2: JP 2016-54053 A

### Summary of Invention

### Technical Problem

At least one object of the present invention is to provide a system that provides a self-sustaining power supply.

### Solution to Problem

According to a non-limiting aspect, a system according to the present invention comprises a first conductive part, a second conductive part, a medium, and a functional part, wherein the first conductive part and the functional part are connected, the second conductive part and the functional part are connected, at least a part of the first conductive part is in contact with the medium, at least a part of the second conductive part is in contact with the medium, and the first conductive part and the second conductive part are not in contact with each other.

In the system according to the present invention, the medium is preferably not an electrolytic solution in batteries.

In the system according to the present invention, the first conductive part preferably comprises a metal, a conductive polymer or a carbon, and the second conductive part comprises a metal, a conductive polymer or a carbon being different from the component of the first conductive part.

In the system according to the present invention, the medium preferably contains water, and a water content of the medium is 1% by mass or more.

In the system according to the present invention, the functional part preferably has a conversion function to convert an output impedance.

In the system according to the present invention, the functional part preferably has an electric storage part, wherein the electric storage part stores an electric charge being supplied from the first conductive part and/or the second conductive part, and the electric storage part has a function to release the stored electric charge in a shorter time than a time required for storage.

In the system according to the present invention, the functional part preferably has an output voltage conversion part.

In the system according to the present invention, the functional part preferably has a voltage boost part.

In the system according to the present invention, an input impedance of the functional part preferably has a non-linear current-voltage characteristic.

In the system according to the present invention, the input impedance of the functional part is preferably 1 kΩ or more.

In the system according to the present invention, a resistance value of the medium between the first conductive part and second conductive part is preferably 1 kΩ or more.

In the system according to the present invention, a measured value of polarization resistance to at least one of the first conductive part and the second conductive part using an AC impedance method is preferably 100 Ω or more.

In the system according to the present invention, an electromotive force generated from the first conductive part and/or the second conductive part is preferably 0.9 V or less.

In the system according to the present invention, a distance between a position where the first conductive part is in contact with the medium and a position where the second conductive part is in contact with the medium is preferably 1 cm or more.

In the system according to the present invention, a lower limit of an operating voltage of the functional part is preferably 0.9 V or less.

According to a non-limiting aspect, an apparatus according to the present invention is the apparatus which comprises a first conductive part and a second conductive part, a functional part, and a voltage boost circuit or a voltage step-down circuit, wherein the first conductive part and the functional part are connected, the second conductive part and the functional part are connected, and the first conductive part and the second conductive part are not in contact with each other.

In the apparatus according to the present invention, at least a part of the first conductive part and/or the second conductive part is preferably comprised of a non-conductive component integrally.

### Advantageous Effects of Invention

According to the present invention, it is provided that a system provides a self-sustaining power supply.

### Brief Description of Drawings

Fig. 1 is a block diagram illustrating a configuration of a system corresponding to at least one of the embodiments of the present invention.
Fig. 2 is a block diagram illustrating a configuration of an electric power conversion part corresponding to at least one of the embodiments of the present invention.

### Description of Embodiments

Hereinbelow, embodiments of the present invention will be described with reference to the accompanying drawings. Hereinbelow, description regarding effects is an aspect of the effects of the embodiments of the present invention, and the effects are not limited to the description herein.

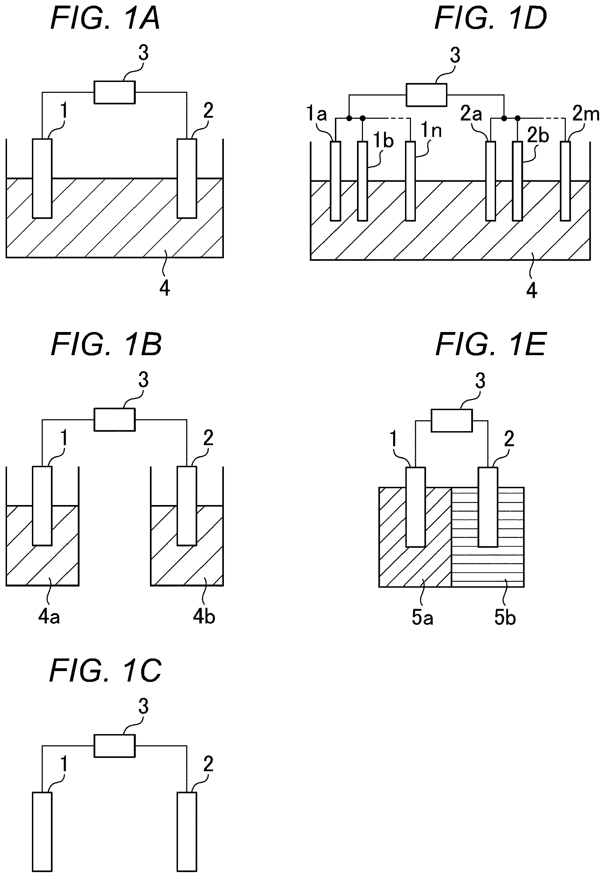

Fig. 1 is a block diagram illustrating a configuration of a system corresponding to at least one of the embodiments of the present invention. As illustrated in Figs. 1A to 1E, the system includes a first conductive part 1, a second conductive part 2, a functional part 3, and a medium 4. The first conductive part 1 and the functional part 3, and the functional part 3 and the second conductive part 2 are electrically connected to each other. The term "electrically connected" means, for example, being connected by a conductive wire or the like to be energizable.

A part or the entirety of the first conductive part 1 and a part or the entirety of the second conductive part 2 are in contact with the medium 4. The first conductive part 1 and the second conductive part 2 are not in contact with each other. "Not in contact" refers to, for example, a state in which the first conductive part 1 and the second conductive part 2 are not in direct contact with each other.

A distance between a position where the first conductive part 1 is in contact with the medium 4 and a position where the second conductive part 2 is in contact with the medium 4, that is, a distance between the first conductive part 1 and the second conductive part 2, is preferably 1 cm or more, more preferably 10 cm or more, still more preferably 100 cm or more, and particularly preferably 1000 cm (10 m) or more.

Both the first conductive part 1 and the second conductive part 2 preferably have conductivity. Here, examples of the material for the first conductive part 1 and the second conductive part 2 include metal, a conductive polymer, and carbon. The shapes of the first conductive part 1 and the second conductive part 2 are not particularly limited. The first conductive part 1 and the second conductive part 2 may formed in a rectangular parallelepiped shape, a columnar shape (a rod shape), a pyramid shape, a conical shape, a plate shape, or a string shape, and may be formed in any shape.

Examples of a metal for use as the first conductive part 1 and the second conductive part 2 that can appropriately be selected include silver, copper, gold, aluminum, magnesium, zinc, nickel, platinum, tin, titanium, stainless steel, zinc oxide, magnesium oxide, and oxide of each of the aforementioned metals. Also, a predetermined metal may be coated with another metal different from the predetermined metal or another material having conductivity. The materials for the first conductive part 1 and the second conductive part 2 may be different from each other, or may be the same as each other. For example, a cylindrical rod material made of stainless steel can be used for the first conductive part 1, and a cylindrical rod material made of zinc can be used for the second conductive part 2. In this case, the first conductive part 1 and the second conductive part 2 are connected to the functional part 3 or a voltage boost circuit/a voltage step-down circuit by a conductive wire.

A measured value of polarization resistance to at least one of the first conductive part 1 or the second conductive part 2 using an AC impedance method is preferably 100 Ω or more.

Here, a conductive part serving as a starting point of current is defined as the first conductive part 1, and a conductive part serving as an ending point is defined as the second conductive part 2. Which conductive part functions as the first conductive part 1 is determined by a material for the conductive part or an environment surrounding the conductive part (for example, temperature, humidity, atmospheric pressure, pH, and the like). A chemical reaction occurs at the interface between the first conductive part 1 or the second conductive part 2 and the medium 4, and free electrons are generated in the conductive part.

For example, when different metals are used for the first conductive part 1 and the second conductive part 2, the conductive part using a metal having a lower standard electrode potential serves as the first conductive part 1, and the conductive part using a metal having a higher standard electrode potential serves as the second conductive part 2. In this case, electrons move from the second conductive part 2 toward the functional part 3, and electrons move from the functional part 3 toward the first conductive part 1. That is, current is generated from the first conductive part 1 to the second conductive part 2 via the functional part 3. For example, in the second conductive part 2, the metal constituting the conductive part is eluted as cations into the medium 4 to generate free electrons, and in the first conductive part 1, the cations in the medium 4 reacts with the electrons to be electrically neutralized.

The levels of the standard electrode potentials are determined by comparison between relative values (relative values) for the standard electrode potentials of the substances, and are not determined by using an absolute value for the standard electrode potential. For example, in a case where substance A having a standard electrode potential of -5 V is compared with substance B having a standard electrode potential of +2 V, the standard electrode potential of substance A is low, and the standard electrode potential of substance B is high.

On the other hand, even in a case where the same metal is used for the conductive parts, one conductive part functions as the first conductive part 1 while the other conductive part functions as the second conductive part 2 depending on the conditions of the environments surrounding the conductive parts, such as temperature, humidity, atmospheric pressure, and pH, and current is generated. Therefore, in a case where the conditions such as ambient temperature, humidity, atmospheric pressure, and pH of the two conductive parts are changed, the one functioning as the first conductive part 1 may function as the second conductive part 2, and the one functioning as the second conductive part 2 may function as the first conductive part 1.

The electromotive force generated from the first conductive part 1 and the second conductive part 2 is preferably 0.9 V or less, more preferably 0.35 V or less, and still more preferably 0.25 V or less. Also, the electromotive force generated from the first conductive part 1 and the second conductive part 2 is preferably 5 mV or more.

The functional part 3 is, for example, a part that executes a predetermined function by energization. The functional part 3 can include an electric power consumption part that consumes electric power to exert a predetermined function, an electric storage part that stores electricity generated in the conductive part, an output voltage conversion part that converts voltage to be output, such as a voltage boost circuit and a voltage step-down circuit, a control part such as a microcomputer that controls a circuit, a communication part that can wirelessly communicate with other devices, and the like. As the electric power consumption part, for example, any of a light source such as an incandescent light bulb and a light emitting diode, a heat generator that emits heat, a sounding body that emits sound, a transmitter that emits a signal, and the like can be employed. The electric storage part may be included in the voltage boost circuit or the voltage step-down circuit. The control part such as a microcomputer can control a circuit to release the electricity stored in the electric storage part under a predetermined condition. The released electricity is consumed in the electric power consumption part. Also, since a small amount of electric power is consumed in the control part such as a microcomputer as well, the stored electricity can be released while securing electric power necessary for activating the control part.

The functional part 3 may include any one selected from the electric power consumption part, the electric storage part, the output voltage conversion part, and the control part, or may be one obtained by combining any two or more selected from the electric power consumption part, the electric storage part, the output voltage conversion part, and the control part. Also, the functional part 3 may be one obtained by integrally combining any two or more selected from the electric power consumption part, the electric storage part, the output voltage conversion part, and the control part, or may be one in which any ones selected from the electric power consumption part, the electric storage part, the output voltage conversion part, and the control part are separately formed while being electrically connected to each other.

The input impedance of the functional part 3 is preferably 1 kΩ or more, and more preferably 10 kΩ or more. In addition, the input impedance of the functional part 3 preferably has a non-linear current-voltage characteristic (I-V characteristic). The non-linear current-voltage characteristic refers to, for example, a case where, in a voltage change when current flows through the functional part 3, the voltage value increases as the current value increases, but as the current value increases, the extent to which the voltage value increases required to increase the current value gets larger, and the voltage is not proportional to the current. In other words, the current value increases as the voltage value applied to the functional part 3 increases, but the degree to which the current value increases gets smaller as the voltage value increases, and the current value is not proportional to the voltage value. Since the input impedance of the functional part 3 has a non-linear current-voltage characteristic, the electromotive force generated between the first conductive part 1 and the second conductive part 2 is easily maintained.

The functional part 3 preferably has a function to convert the output impedance. This makes it possible to control the influence on an input signal of the functional part 3. Also, the functional part 3 includes the electric storage part, and the electric storage part stores an electric charge being supplied from the first conductive part and/or the second conductive part. The control part takes control to release the stored electric charge in a shorter time than a time required to store the charge.

The lower limit value of the operating voltage of the functional part 3 is preferably 0.9 V or less. The lower limit value is more preferably 0.35 V or less, and still more preferably 20 mV or less.

The medium 4 may be in any form selected from a gas, liquid, and solid forms. The medium 4 may be sol or gel. The medium 4 is not particularly limited as long as it can cause a chemical reaction at the interface with the first conductive part 1 or the second conductive part 2. As the medium 4, a medium having no conductivity is preferably used. The gas is not particularly limited as long as it is gas when constituting the present system, and examples thereof include oxygen, carbon dioxide, nitrogen, hydrogen, and methane. When gas is used as the medium 4, only one type of gas may be used, or a mixture of a plurality of types of these gases may be used.

The liquid used as the medium 4 is not particularly limited as long as it is liquid when constituting the present system. For example, not only water but also an organic solvent having high polarity, an organic solvent having low polarity, or a non-polar organic solvent can be used. The liquid used as the medium 4 may also be a mixture of water and an organic solvent having high polarity, a mixture of two or more different organic solvents, an emulsion, or the like. As the water, not only pure water but also water containing an electrolyte can be used. The concentration of cations, out of electrolytes contained in the water, may be 1 mol/L or less, 0.6 mol/L or less, 0.1 mol/L or less, 0.01 mol/L or less, 0.001 mol/L or less, or 0.0001 mol/L or less. As the organic solvent having high polarity, for example, lower alcohols such as methanol and ethanol, lower carboxylic acids such as formic acid and acetic acid, acetone, tetrahydrofuran, dimethyl sulfoxide, and the like can be used. Also, as the organic solvent having low polarity, higher alcohols such as hexanol and octanol, higher carboxylic acids such as hexanoic acid and octanoic acid, and the like can be used. Examples of the non-polar organic solvent include aliphatic hydrocarbons such as hexane, octane, and nonane, and aromatic compounds such as benzene, toluene, and xylene. When liquid is used as the medium 4, only one type of liquid may be used, or a mixture of a plurality of types of these liquids may be used.

The solid used as the medium 4 is not particularly limited as long as it is solid when constituting the present system, and may be, for example, wood, plastic, metal, ceramics, concrete, or the like. Other examples of the solid used as the medium 4 include a powdery or granular solid such as sand and soil can be used, and a plurality of stones or rocks stacked can also be used. In a case where the sand, the soil, or the stones or rocks stacked is/are used as the medium 4, fine voids are generated in the medium 4. However, such voids may be present as long as the medium 4 is physically connected.

Substances having different compositions and characteristics are physically connected to enable the medium 4 to be formed. For example, in a case where plastic is in contact with the first conductive part 1, where wood is in contact with the second conductive part 2, and where the plastic and the wood come into contact with each other, the plastic and the wood function as the medium 4.

The resistance value of the medium 4 between the first conductive part 1 and the second conductive part 2 is preferably 1 kΩ or more, and more preferably 10 kΩ or more.

The medium 4 may be an insulator. The insulator refers to, for example, a non-conductor, and refers to a substance having a property of hardly conducting electricity or heat. The electric conductivity of the insulator is preferably 10⁻⁵ S/m or less, more preferably 10⁻⁸ S/m, and still more preferably 10⁻¹¹ S/m.

The medium 4 preferably contains water. The water content of the medium 4 made of sand, soil, or the like is preferably 1% by mass or more, more preferably 5% by mass or more, and still more preferably 10% by mass or more. The water content of the medium 4 is preferably 200% by mass or less. Here, the water content refers to a value obtained by dividing the weight of water by the sum of the weight of water and the weight of a solid content.

As illustrated in Fig. 1A, the system according to the embodiment of the present invention includes the first conductive part 1, the second conductive part 2, the functional part 3, and the medium 4. The medium 4 is in contact with both the first conductive part 1 and the second conductive part 2, and the functional part 3 is electrically connected to the first conductive part 1 and the second conductive part 2. As illustrated in Fig. 1B, in the system according to the embodiment of the present invention, a medium 4a and a medium 4b may be used instead of the medium 4. The medium 4a and the medium 4b may be different types of medium from each other, or may be the same type of medium. In Fig. 1B, the media 4a and 4b are housed in different containers and are in a non-contact state.

As illustrated in Fig. 1C, in the system according to the embodiment of the present invention, the first conductive part 1 and the second conductive part 2 may be electrically connected without using the medium 4.

As illustrated in Fig. 1D, in the system according to the embodiment of the present invention, a plurality of first conductive parts 1a, 1b,... 1n (n is an integer of 2 or more) may be electrically connected in parallel. Also, a plurality of second conductive parts 2a, 2b,... 2m (m is an integer of 2 or more) may be electrically connected in parallel. Note that the plurality of first conductive parts 1a, 1b,... 1n may be electrically connected in series. Further, the plurality of second conductive parts 2a, 2b,... 2m may be electrically connected in series.

In at least one of the embodiments of the present invention, as illustrated in Fig. 1E, a part or the entirety of the first conductive part 1 may be covered with a non-conductive part 5a, and a part or the entirety of the second conductive part 2 may be covered with a non-conductive part 5b. By bringing the non-conductive parts 5a and 5b into contact with each other, the non-conductive parts 5a and 5b function as the medium 4. Here, the non-conductive parts 5a and 5b may be made of different insulators from each other, or may be made of insulators having the same compositions or properties.

The configurations illustrated in Figs. 1A to 1E may be combined. The combination is not limited as long as the mode exerts the effects of the present invention.

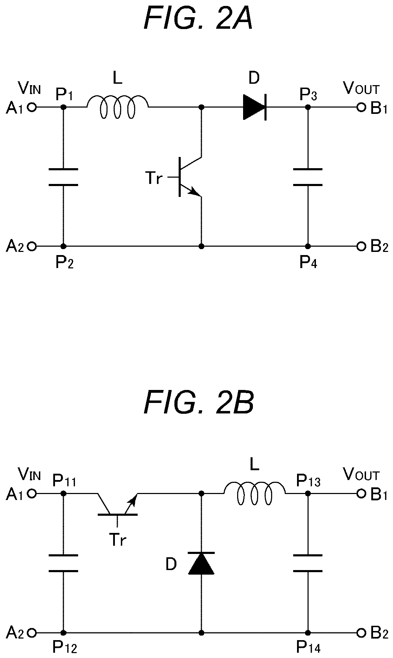

Fig. 2 is a block diagram illustrating a configuration of an electric power conversion part according to the embodiment of the present invention. Fig. 2A is a circuit diagram of a voltage boost circuit according to the embodiment of the present invention. The voltage boost circuit or the voltage step-down circuit is an example of the functional part 3, and includes an electric storage part.

As illustrated in the figure, an inductor L, a diode D, a transistor Tr, and a capacitor C are electrically connected. For example, an input terminal A1 is connected to the first conductive part 1, and an input terminal A2 is connected to the second conductive part 2. An output terminal B1 and an output terminal B2 are connected to an electric power consumption part, a control part, and the like. Note that the control part may be connected in parallel with the voltage boost circuit between the voltage boost circuit, and the first conductive part 1 and the second conductive part 2. When input voltage V_{IN} is applied while the transistor Tr is ON, energy is stored in the inductor L. The input voltage V_{IN} is a potential difference between a connection point P₁ and a connection point P₂. When the transistor Tr is OFF, the energy stored in the inductor L is added to the electric energy derived from the input voltage V_{IN}, and the energy is output via the diode D. As a result, output voltage V_{OUT}, which is a potential difference between the connection point P₁ and the connection point P₂, is higher than the input voltage V_{IN}. The voltage boost circuit is based on the premise that the input voltage V_{IN} is lower voltage than predetermined voltage, and the voltage boost control may not be executed in a case where the input voltage V_{IN} is higher than the predetermined voltage. The input voltage V_{IN} of the voltage boost circuit is preferably 5 mV or more. Note that ON/OFF of the transistor Tr is controlled by the control part.

Fig. 2B is a circuit diagram of a voltage step-down circuit according to the embodiment of the present invention. As illustrated in the figure, a transistor Tr, an inductor L, a diode D, and a capacitor C are electrically connected. For example, an input terminal A1 is connected to the first conductive part 1, and an input terminal A2 is connected to the second conductive part 2. An output terminal B1 and an output terminal B2 are connected to an electric power consumption part, a control part, and the like. Note that the control part may be connected in parallel with the voltage step-down circuit between the voltage step-down circuit, and the first conductive part 1 and the second conductive part 2.

When the transistor Tr is ON, electric energy is stored in the inductor L. Input voltage V_{IN} is a potential difference between a connection point P₁₁ and a connection point P₁₂, and output voltage V_{OUT} is a potential difference between a connection point P₁₃ and a connection point P₁₄. In this case, the input voltage V_{IN} is substantially equal to the output voltage V_{OUT}. When the transistor Tr is OFF, the potential of a connection point P₁₅ on the left side of the inductor L becomes lower than the potential of the connection point P₁₄, and the output voltage V_{OUT} is lower. The voltage step-down circuit is based on the premise that the input voltage V_{IN} is higher voltage than predetermined voltage, and the voltage step-down control may not be executed in a case where the input voltage V_{IN} is lower than the predetermined voltage. Note that ON/OFF of the transistor Tr is controlled by the control part.

In the embodiments of the present invention, a "system" refers to, for example, a system including elements necessary for achieving the effects of the present invention. The system more specifically includes a circuit and a device. A "conductive part" may be, for example, any material as long as it is an energizable member. A "functional part" refers to, for example, a part that executes a predetermined function as current flows therein. The functional part may be a part that converts electricity into energy such as light and heat, or a part that controls a circuit.

In the embodiment of the present invention, an "electrolytic solution" refers to, for example, a solution having electric conductivity in which an ionic substance is dissolved in a polar solvent. A "voltage boost circuit" refers to, for example, a circuit that boosts and outputs input voltage. A "voltage step-down circuit" refers to, for example, a circuit that steps down and outputs input voltage. A "conductive polymer" refers to, for example, a polymer compound having electric conductivity. "Carbon" refers to, for example, carbon fibers having conductivity. "Forming integrally" refers to, for example, connecting different objects to each other, and more specifically, connecting them by means of a chemical and/or physical force such as adhesion using an adhesive, mechanical connection using another member, welding, and pressure bonding.

### Examples

Hereinbelow, the present invention will be described in more detail with reference to Examples, but the present invention is not limited by these Examples.

### (Example 1)

The following test was performed at normal temperature and normal pressure. A circuit including the first conductive part 1, the second conductive part 2, the functional part 3, and the medium 4 illustrated in Fig. 1A was used. A plate-shaped member (0.5 mm thick, 10 cm × 15 cm) made of stainless steel (austenite, SUS 304 series) was used as the first conductive part 1, a plate-shaped member (0.5 mm thick, 10 cm × 15 cm) made of a galvanized steel plate (iron) was used as the second conductive part 2, and the first conductive part 1, the second conductive part 2, and the functional part 3 were connected to each other by a copper conductive wire. The functional part 3 includes a power consumption part, an output voltage conversion part, and a control part. As the functional part 3, one having an input impedance of 1 kΩ or more and a nonlinear current-voltage characteristic was used. As the power consumption part, an LED bulb that lights up when a current of 2 mA or more flows was used. For the output voltage conversion part, the voltage boost circuit illustrated in Fig. 2A was used to form a system.

The first conductive part 1 was connected to the input terminal A1 of the voltage boost circuit serving as the output voltage conversion part, and the output terminal B1 of the voltage boost circuit was connected to the LED bulb. Further, the second conductive part 2 was connected to the input terminal A2 of the voltage boost circuit, and the output terminal B2 of the voltage boost circuit was connected at a terminal of the LED bulb opposite to a terminal of the LED bulb connected to the output terminal B1.

Pure water (manufactured by KOGA Chemical Mfg Co., Ltd., high-purity purified water, temperature 25°C: medium 4) was put in an acrylic container (cubic body with outer dimensions of 15 cm × 15 cm × 15 cm, inner dimensions of 14.5 cm) up to a height of 7.5 cm, and the first conductive part 1 and the second conductive part 2 were immersed in the pure water to construct a system. The first conductive part 1 and the second conductive part 2 were not in contact with each other, the distance between the first conductive part 1 and the second conductive part 2 was 12 cm, and the first conductive part 1 and the second conductive part 2 were installed so that the plate-like planes of the first conductive part 1 and the second conductive part 2 were parallel to each other.

In the constructed system, the voltage between the first conductive part 1 and the second conductive part 2 was measured (Measurement 1). For the measurement, a 34401A multimeter manufactured by Agilent Technologies was used. The result is shown in Table 1. In the system illustrated in Example 1, the LED bulb repeatedly blinked every 270 to 330 seconds. That is, it was confirmed that an electromotive force was generated from the first conductive part 1 and/or the second conductive part 2.

Pure water (manufactured by KOGA Chemical Mfg Co., Ltd., high-purity purified water, temperature 25°C: medium 4) was put in an acrylic container (cubic body with outer dimensions of 15 cm × 15 cm × 15 cm, inner dimensions of 14.5 cm) up to a height of 7.5 cm, and the first conductive part 1 and the second conductive part 2 were immersed in the purified water. The first conductive part 1 and the second conductive part 2 were not in contact with each other, the distance between the first conductive part 1 and the second conductive part 2 was 12 cm, and the first conductive part 1 and the second conductive part 2 were installed so that the plate-like planes of the first conductive part 1 and the second conductive part 2 were parallel to each other. The first conductive part 1 and the second conductive part 2 were not in an electrically connected state. Then, the voltage between the first conductive part 1 and the second conductive part 2 was measured using the 34401A multimeter (Measurement 2). Further, in this state, the resistance value of the medium 4 between the first conductive part 1 and the second conductive part 2 was measured (Measurement 3).

### (Example 2)

Measurements 1 to 3 were performed in a similar manner to that in Example 1 except that the medium 4 was changed to soil (soil for indoor plants manufactured by Protoleaf Inc.). The result is shown in Table 1. In the system illustrated in Example 2, the LED bulb repeatedly blinked at substantially equal intervals every 21 to 23 seconds. That is, it was confirmed that an electromotive force was generated from the first conductive part 1 and/or the second conductive part 2.

### (Example 3)

Measurements 1 to 3 were performed in a similar manner to that in Example 1 except that a waste cloth immersed in an aqueous solution in which 5g of salt (Hakata Salt manufactured by Hakata Salt Co., Ltd.) was dissolved in 50g of pure water (the same as in Example 1) was attached to the surfaces of the first conductive part 1 and the second conductive part 2 in contact with the medium 4, and the medium 4 was changed to sand (silica sand having a particle size peak (weight ratio) of about 0.9 mm manufactured by Toyo Matelan Co., Ltd.). The result is shown in Table 1. In the system illustrated in Example 3, the LED bulb repeatedly blinked every 80 to 100 seconds. That is, it was confirmed that an electromotive force was generated from the first conductive part 1 and/or the second conductive part 2.

**[Table 1]**

| | Measurement 1 [mV] | Measurement 2 [mV] | Measurement 3 [kΩ] |
|---|---|---|---|
| Example 1 | 239 | 952 | 20 |
| Example 2 | 291 | 822 | 1,700 |
| Example 3 | 253 | 954 | 250 |

### Reference Signs List

- 1: FIRST CONDUCTIVE PART
- 2: SECOND CONDUCTIVE PART
- 3: FUNCTIONAL PART
- 4: MEDIUM
- 5: NON-CONDUCTIVE PART

## Claims

1. A system comprising a first conductive part, a second conductive part, a medium, and a functional part,
wherein the first conductive part and the functional part are connected,
the second conductive part and the functional part are connected,
at least a part of the first conductive part is in contact with the medium,
at least a part of the second conductive part is in contact with the medium, and
the first conductive part and the second conductive part are not in contact with each other.

2. The system according to claim 1,
wherein the medium is not an electrolytic solution in batteries.

3. The system according to claim 1 or 2,
wherein the first conductive part comprises a metal, a conductive polymer or a carbon, and
the second conductive part comprises a metal, a conductive polymer or a carbon being different from the component of the first conductive part.

4. The system according to any one of claims 1 to 3,
wherein the medium contains water, and a water content of the medium is 1% by mass or more.

5. The system according to any one of claims 1 to 4,
wherein the functional part has a conversion function to convert an output impedance.

6. The system according to any one of claims 1 to 5,
wherein the functional part has an electric storage part,
the electric storage part stores an electric charge being supplied from the first conductive part and/or the second conductive part, and
the electric storage part has a function to release the stored electric charge in a shorter time than a time required for storage.

7. The system according to any one of claims 1 to 6,
wherein the functional part has an output voltage conversion part.

8. The system according to any one of claims 1 to 7,
wherein the functional part has a voltage boost part.

9. The system according to any one of claims 1 to 8,
wherein an input impedance of the functional part has a non-linear current-voltage characteristic.

10. The system according to any one of claims 1 to 9,
wherein the input impedance of the functional part is 1 kΩ or more.

11. The system according to any one of claims 1 to 10,
wherein a resistance value of the medium between the first conductive part and second conductive part is 1 kΩ or more.

12. The system according to any one of claims 1 to 11,
wherein a measured value of polarization resistance to at least one of the first conductive part and the second conductive part using an AC impedance method is 100 Ω or more.

13. The system according to any one of claims 1 to 12,
wherein an electromotive force generated from the first conductive part and/or the second conductive part is 0.9 V or less.

14. The system according to any one of claims 1 to 13,
wherein a distance between a position where the first conductive part is in contact with the medium and a position where the second conductive part is in contact with the medium is 1 cm or more.

15. The system according to any one of claims 1 to 14,
wherein a lower limit of an operating voltage of the functional part is 0.9 V or less.

16. An apparatus comprising a first conductive part and a second conductive part, a functional part, and a voltage boost circuit or a voltage step-down circuit,
wherein the first conductive part and the functional part are connected,
the second conductive part and the functional part are connected, and
the first conductive part and the second conductive part are not in contact with each other.

17. The apparatus according to claim 16,
wherein at least a part of the first conductive part and/or the second conductive part is comprised of a non-conductive component integrally.
